# FASCICULE DE BREVET EUROPEEN

(11) **EP 0 932 283 B1**
(45) Date de publication et mention de la délivrance du brevet: **13.06.2001**
(21) Numéro de dépôt: 99400126.1
(22) Date de dépôt: 20.01.1999
(51) Int. Cl.: H04L 27/233

(54) **Dispositif de démodulation d'un signal binaire modulé en phase par impulsions codées**
BPSK-Demodulator für ein PCM-Signal
BPSK demodulator for a PCM signal

(30) Priorité: 21.01.1998 FR 9800584
(43) Date de publication de la demande: 28.07.1999
(73) Titulaire: STMicroelectronics SA, 94250 Gentilly Cedex (FR)
(72) Inventeur: Troise, Cyril, 94230 Cachan (FR)
(74) Mandataire: Ballot, Paul

(56) Documents cités:
- EP-A- 0 576 826
- EP-A- 0 762 628
- FR-A- 2 265 140
- GB-A- 2 308 948

## Description

La présente invention concerne un dispositif de démodulation d'un signal binaire modulé en phase par impulsions codées.

La modulation en phase d'un signal par impulsions codées est couramment désignée comme la modulation PSK (pour *phase shift keying* en littérature anglo-saxonne). Lorsque la porteuse est un signal binaire, on parle de modulation BPSK.

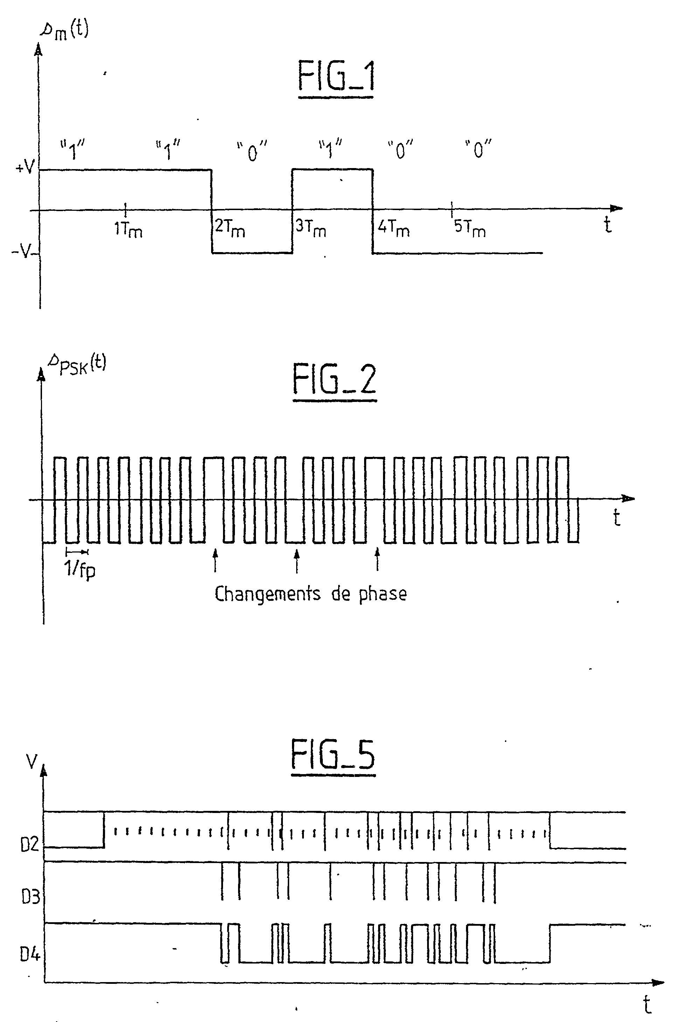

Dans la modulation BPSK, la porteuse est un signal binaire haute fréquence. Le signal modulant est un signal binaire basse fréquence, comprenant une série de transitions entre un niveau haut et un niveau bas représentant une suite codée de "0" et de "1". Le signal modulé BPSK résultant est un signal binaire dans lequel chaque changement de phase correspond à une transition du niveau haut vers le niveau bas, appelée dans la suite transition descendante ou à une transition du niveau bas vers le niveau haut, appelée dans la suite transition montante du signal modulant. La figure 1 représente un exemple de signal binaire modulant sₘ(t) avec un codage du type non retour à zéro, dit codage NRZ. Un bit "1" est codé sous la forme d'un niveau haut sur une période tm et un bit "0" est codé sous la forme d'un niveau bas sur la période tₘ. Le niveau haut et le niveau bas sont respectivement à +V et -V.

La figure 2 représente un signal modulé BPSK résultant s_{PSK}(t), à partir d'une porteuse de fréquence fₚ.

Dans un exemple pratique, on a par exemple une fréquence fₘ du signal modulant de 105,9KHz et une fréquence de porteuse fp de 847 KHz (fₚ multiple de fₘ, pour avoir une modulation cohérente). Habituellement, par convention le premier changement de phase dans le signal modulé correspond à une première transition descendante équivalente à un bit de départ.

Dans la présente invention, on cherche un dispositif de démodulation d'un signal binaire modulé en phase par impulsions codées. Il s'agit de détecter les changements de phase dans un signal modulé reçu, pour régénérer en sortie un signal démodulé correspondant au signal modulant.

Les dispositifs de démodulation du type analogique utilisent des mélangeurs qui sont trop encombrants et très sujets aux dérives. Ces dispositifs analogiques sont en outre difficiles à mettre en oeuvre en pratique. On pourrait utiliser un dispositif numérique du type à OU exclusif et circuits à retard, mais de tels dispositifs sont très dépendants de la fréquence de modulation. Il faut les adapter pour chaque fréquence de modulation différente.

Le document EP-A-0 576 826 décrit un dispositif de démodulation d'un signal binaire modulé en phase, comprenant une boucle à verrouillage de phase.

Dans l'invention, on a cherché un dispositif de démodulation BPSK capable de détecter les changements de phase sur le signal modulé haute fréquence et qui soit peu sensible aux dérives (de température, de procédé de fabrication) et adapté à une large plage de fréquence de modulation.

Une solution à ce problème technique a été trouvée dans un dispositif de démodulation à boucle à verrouillage de phase, comprenant un comparateur de phase, un filtre et un oscillateur commandé en tension.

Selon l'invention, ledit oscillateur est tel qu'il délivre en sortie un signal binaire synchrone du signal modulé, de fréquence égale à N fois la fréquence porteuse, la bouclé à verrouillage de phase comprenant en outre un diviseur par N de la sortie de l'oscillateur pour l'appliquer en entrée du comparateur de phase, et le dit signal de sortie de l'oscillateur étant appliqué comme horloge d'un premier compteur pour mesurer la durée des niveaux hauts du signal modulé et d'un deuxième compteur pour mesurer la durée des niveaux bas du signal modulé.

La sortie du premier compteur est utilisée pour délivrer en sortie un premier signal de détection de changement de phase sur le niveau haut, quand le comptage atteint un nombre prédéterminé. De même, la sortie du deuxième compteur est utilisée pour délivrer en sortie un deuxième signal de détection de changement de phase sur le niveau bas, quand le comptage atteint un nombre prédéterminé.

Ces signaux de détection de changement de phase sont appliqués à une bascule RS, dont la sortie fournit le signal démodulé.

Dans un exemple, si le changement de phase sur le niveau haut du signal modulé s_{PSK}(t) correspond à une transition descendante du signal modulant sₘ(t) et le changement de phase sur le niveau bas du signal modulé s_{PSK}(t) correspond à une transition montante du signal modulant sₘ(t), on appliquera le premier signal de détection sur l'entrée /R de mise à zéro de la bascule RS, tandis que le deuxième signal de détection sera appliqué sur l'entrée /S de mise à un de cette bascule. Dans le cas contraire, c'est le deuxième signal de détection que l'on appliquera sur l'entrée de mise à zéro et le premier signal sur l'entrée de mise à un de la bascule RS.

De préférence, pour améliorer la tenue aux dérives de température et celles dues aux variations inhérentes au procédé de fabrication, on prévoit que le filtre passe-bas de la boucle à verrouillage de phase comprend des éléments de résistance et de capacité sur-dimensionnés.

D'autres caractéristiques et avantages de l'invention sont détaillés dans la description suivante faite à titre indicatif et nullement limitatif et en référence aux dessins annexés, dans lesquels :
- les figures 1 et 2 déjà décrites représentent un exemple de signal modulant sₘ(t) avec un codage de type NRZ et le signal s_{PSK}(t) modulé BPSK correspondant;
- la figure 3 représente un dispositif de démodulation BPSK selon l'invention;
- la figure 4 représente un diagramme temporel d'un exemple de séquence du signal modulant sₘ(t) et le signal modulé SPSK(t), le signal de sortie de l'oscillateur commandé en tension SVCO(t), les signaux de détection de changement de phase D2, D3 et le signal démodulé D4 correspondants et
- la figure 5 représente un autre diagramme temporel montrant un exemple de séquence pour les signaux de détection D2 et D3 et le signal démodulé D4 correspondant, obtenu en sortie de la bascule RS.

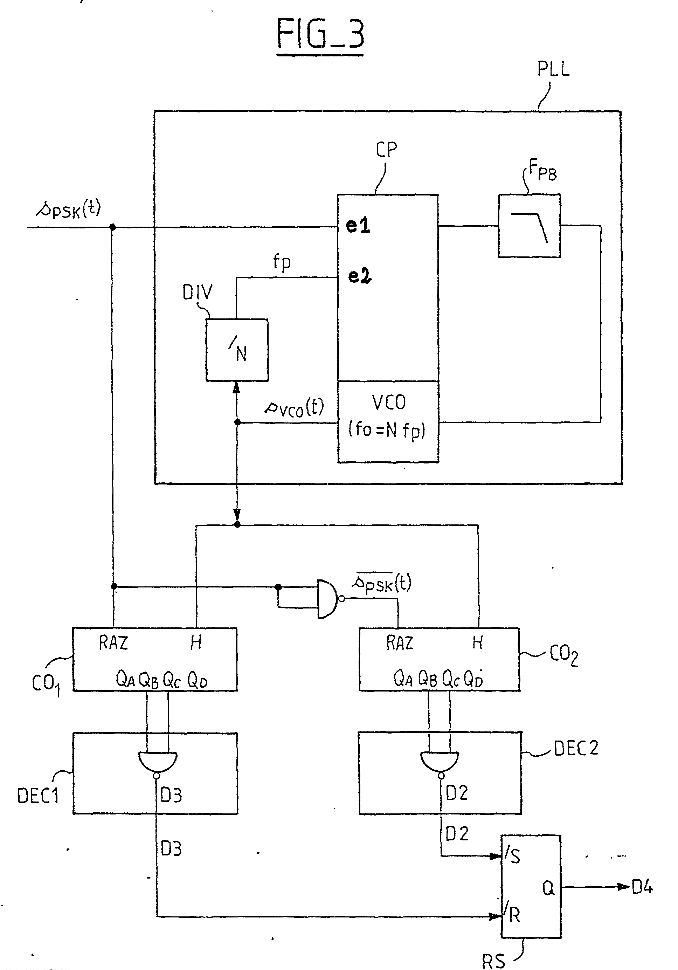

La figure 3 représente un dispositif de démodulation BPSK selon l'invention.

Il comprend une boucle à verrouillage de phase PLL. Cette boucle à verrouillage de phase comprend un comparateur de phase CP, suivi d'un filtre passe-bas FPB et un oscillateur commandé en tension VCO par la sortie du filtre. Selon l'invention, la boucle à verrouillage de phase comprend en outre un diviseur par N, noté DIV, entre la sortie de l'oscillateur contrôlé en tension et une entrée e2 du comparateur de phase CP. L'autre entrée e1 du comparateur de phase CP reçoit le signal modulé s_{PSK}(t).

On note fₚ la fréquence de la porteuse du signal modulé s_{PSK}(t).

Lorsque la boucle du circuit de boucle à verrouillage de phase PLL est accrochée, l'oscillateur VCO selon l'invention est tel qu'il fournit en sortie un signal binaire synchrone s_{VCO}(t), de fréquence f₀ égale à N fois la fréquence porteuse fₚ (N différent de 1). On retrouve en entrée e2 du comparateur un signal synchrone de fréquence égale à la fréquence porteuse fₚ du signal modulé s_{PSK}(t).

Le dispositif de démodulation selon l'invention comprend en outre un premier compteur CO₁ pour mesurer la durée des niveaux hauts du signal modulé. Ce compteur CO₁ reçoit sur son entrée RAZ de remise à zéro, le signal modulé s_{PSK}(t). Il reçoit sur son entrée horloge H, le signal de sortie s_{VCO}(t) de fréquence f₀=N.fₚ de l'oscillateur VCO. Ainsi, les niveaux bas du signal s_{PSK}(t) remettent à zéro le compteur, tandis que le comptage des impulsions de fréquence f₀ se fait sur les niveaux hauts. Les sorties QA, QB, QC, et QD du compteur indiquent le nombre d'impulsions de fréquence f₀ comptées pour chaque niveau haut du signal modulé.

Le dispositif de démodulation comprend un deuxième compteur CO₂ pour mesurer la durée des niveaux bas du signal modulé. Ce compteur reçoit sur son entrée RAZ de remise à zéro, l'inverse du signal modulé s_{PSK}(t). Il reçoit sur son entrée horloge H, le signal de sortie de l'oscillateur VCO. Ainsi, le signal s_{PSK}(t) est utilisé pour remettre à zéro le compteur sur chaque niveau haut, tandis que le comptage des impulsions de fréquence f₀ se fait sur les niveaux bas. Les sorties QA, QB, QC, et QD du compteur indiquent le nombre d'impulsions de fréquence f₀ comptées pour chaque niveau bas du signal modulé.

Dans l'exemple représenté, les sorties de chaque compteur sont appliquées à un décodeur respectif, apte à détecter un changement de phase. En effet, un changement de phase sur un niveau se traduit par une durée double de la normale. Ce détecteur consiste donc en un décodeur d'un nombre déterminé d'impulsions. Dans un exemple, si on choisit N=8, c'est à dire f₀=8.fₚ, la durée normale d'un niveau haut (ou d'un niveau bas) du signal modulé s_{PSK} (t) correspond normalement à 4 impulsions de fréquence f₀. Dans le cas où l'on a un changement de phase sur ce niveau, ce niveau dure deux fois plus longtemps (une demi-période supplémentaire). Ainsi, au lieu de quatre impulsions, ce niveau avec changement de phase correspond à huit impulsions de fréquence f₀. Pour détecter un changement de phase, il suffit de détecter que ce niveau dure plus de 4 impulsions de signal s_{VCO}(t). Dans cet exemple avec N=8, on peut être certain que l'on a un changement de phase à partir de six ou sept impulsions. C'est le seuil de détection. Dans cet exemple, il suffit de décoder les sorties QB et QC, pour détecter le couple (Qb Qc) = (1, 1). Ainsi, dès que le détecteur décode que 6 impulsions ont été comptées, il génère en sortie une impulsion de détection de changement de phase. Dans l'exemple représenté, le décodeur est une simple porte NAND. La sortie de ce décodeur est le signal de détection de changement de phase sur le niveau correspondant du signal modulé s_{PSK}(t).

Les sorties QB, QC du premier compteur sont ainsi appliquées à un premier détecteur DEC1 réalisé par une porte NAND, pour détecter un changement de phase sur le niveau haut. Le signal de détection de changement de phase sur le niveau haut, en sortie de ce décodeur, est noté D3.

De même, les sorties QB, Qc du deuxième compteur sont appliquées à un deuxième détecteur DEC2 réalisé par une porte NAND, pour détecter un changement de phase sur le niveau bas du signal modulé s_{PSK}(t). Le signal de détection de changement de phase sur le niveau bas du signal modulé s_{PSK}(t), en sortie de ce décodeur, est noté D2.

Le comptage des impulsions et le décodage du nombre d'impulsions peuvent être effectués de différentes manières. Dans un autre exemple de réalisation, on peut utiliser comme compteur, un compteur à sortie décimale décodée, avec entrée de remise à zéro RAZ. Dans cet exemple, le compteur fournit directement en sortie le signal de détection de changement de phase, sans logique supplémentaire. Ainsi, de manière générale, on utilise la sortie de chaque compteur, directement ou avec une logique supplémentaire, pour fournir le signal de détection correspondant.

Le dispositif de démodulation comprend enfin un circuit pour générer un signal démodulé, noté D4 à partir de ces deux signaux de détection de changement de phase. On utilise ces signaux pour forcer en sortie soit un passage au niveau haut soit un passage au niveau bas. Si par exemple, le changement de phase sur le niveau haut du signal modulé s_{PSK}(t) correspond à une transition descendante du signal modulant sₘ(t) et le changement de phase sur le niveau bas du signal modulé s_{PSK}(t) correspond à une transition montante du signal modulant sₘ(t), on utilisera le premier signal de détection D3 pour forcer la mise à "0" et le deuxième signal de détection, D2, pour forcer la mise à "1" du signal démodulé.

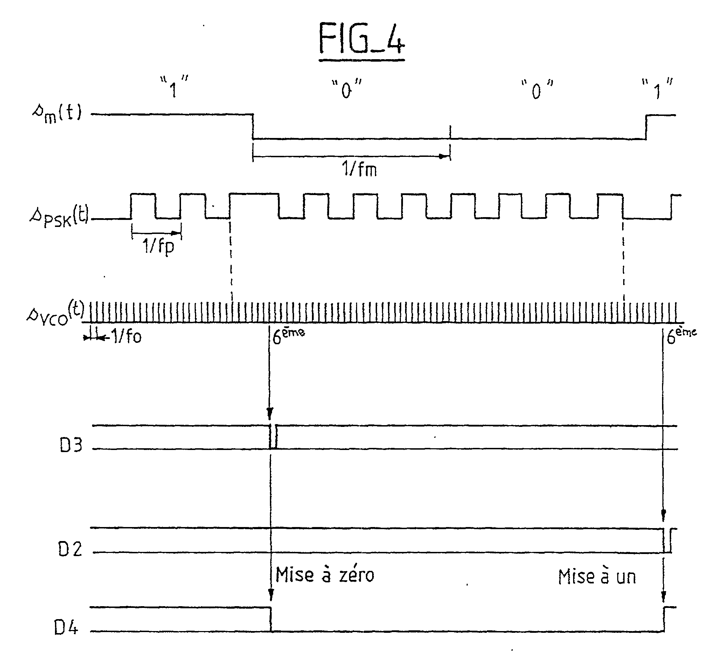

Le circuit de génération du signal démodulé à partir de ces signaux D2 et D3 est par exemple une bascule RS, dont l'entrée /R de mise à 0 reçoit le signal D3 et dont l'entrée de mise à 1 /S reçoit le signal D2. La sortie Q de cette bascule RS fournit le signal démodulé attendu, noté D4, comme représenté sur la figure 4. Ceci vaut pour un signal de détection D3 correspondant à une transition descendante du signal modulant, le signal de détection D2 correspondant alors à une transition montante du signal modulant. Dans le cas contraire, c'est le signal D2 que l'on appliquera sur l'entrée de mise à zéro et le signal D3 que l'on appliquera sur l'entrée de mise à 1.

Cette invention s'applique à tous les types de codage binaire qui peuvent être utilisés pour le signal modulant. Le code utilisé n'a aucune incidence sur le dispositif de démodulation selon l'invention, basé sur la détection des changements de phase.

En pratique, on a pu montrer que le dispositif de démodulation selon l'invention fonctionne dans une plage de fréquence de modulation très large, correspondant à la plage de capture de la boucle à verrouillage de phase. Dans l'exemple d'une fréquence de porteuse typique à 847 KHz, le dispositif de démodulation selon l'invention fonctionne dans une plage de fréquence de capture de la boucle à verrouillage de phase allant de 620 KHz à 1.15 MHz.

En outre, en utilisant des éléments de résistance et de capacité sur-dimensionnés dans le filtre passe-bas de ladite boucle, par exemple dans un rapport 10, on améliore la tenue aux dérives de température et de procédé de fabrication du dit dispositif, car aucun élément du dispositif de démodulation selon l'invention n'est critique.

La présente invention est particulièrement adaptée à la transmission de données entre une carte à micromodules dite smart card, du type sans contact et un système applicatif comprenant un lecteur d'une telle carte. Dans une telle application, on retrouve un dispositif de démodulation selon l'invention dans le système de lecture.

## Revendications

1. Dispositif de démodulation d'un signal binaire de fréquence porteuse fₚ, modulé en phase (s_{PSK}(t)) par les impulsions codées d'un signal modulant sₘ(t), comprenant une boucle à verrouillage de phase (PLL) caractérisé en ce que la boucle à verrouillage de phase comprend un comparateur de phase (CP) suivi d'un filtre passe-bas (FPB) et un oscillateur contrôlé en tension (VCO) par la sortie du filtre, l'oscillateur contrôlé en tension délivrant en sortie un signal binaire (s_{VCO}^{(t)}) synchrone du signal modulé (s_{PSK}(t)) et ayant une fréquence (f₀), égale à N fois la fréquence porteuse fₚ, la boucle à verrouillage de phase comprenant en outre un diviseur par N du dit signal de sortie (s_{VCO}(t)) de l'oscillateur, pour appliquer sur une entrée (e2) du comparateur de phase (CP), un signal binaire synchrone du signal modulé et de fréquence, la fréquence porteuse fₚ, l'autre entrée (e1) du comparateur de phase recevant ledit signal modulé (s_{PSK}(t)), le signal de sortie (s_{VCO}(t)) de l'oscillateur étant appliqué comme horloge (H) d'un premier compteur binaire (CO₁) pour mesurer la durée des niveaux hauts du signal modulé (s_{PSK}(t)) et comme horloge d'un deuxième compteur binaire (CO₂) pour mesurer la durée des niveaux bas du dit signal modulé, afin de détecter les changements de phase sur ces niveaux.

2. Dispositif de démodulation selon la revendication 1, caractérisé en ce que le premier compteur (CO₁₎ et le deuxième compteur (CO₂) fourni sont adaptés pour respectivement un premier signal (D3) de détection de changement de phase sur le niveau haut du signal modulé et un deuxième signal (D2) de détection de changement de phase sur le niveau bas du signal modulé lorsque le nombre d'impulsions comptées dans le compteur respectif dépasse un nombre prédéterminé.

3. Dispositif de démodulation selon la revendication 2, caractérisé en ce que le dispositif de démodulation comprend une bascule (RS), le premier signal de détection (D3) correspondant à une transition descendante du signal modulant sₘ(t) étant appliqué sur l'entrée de mise à zéro (/R), le deuxième signal de détection (D2) correspondant à une transition montante du signal modulant étant appliqué sur l'entrée de mise à un (/S), cette bascule donnant en sortie le signal démodulé (D4).

4. Dispositif de démodulation selon l'une quelconque des revendications précédentes, caractérisé en ce que N est égal à 8.

5. Dispositif de démodulation selon l'une quelconque des revendications précédentes, caractérisé en ce que le filtre passe-bas (FPB), comprend des éléments de capacité et de résistance sur-dimensionnés.

6. Application d'un dispositif de démodulation selon l'une quelconque des revendications précédentes, à une carte à micromodule du type sans contact et à un système de lecture correspondant.

## Claims

1. Device for demodulating a binary signal of carrier frequency fₚ, phase modulated (s_{PSK}(t)) by the coded pulses of a modulating signal sₘ(t), comprising a phase lock loop (PLL), characterised in that the phase lock loop comprises a phase comparator (CP) followed by a low-pass filter (FPB) and an oscillator which is voltage controlled (VCO) by the output of the filter, the voltage-controlled oscillator delivering as an output a synchronous binary signal (s_{VCO}(t)) of the modulated signal (s_{PSK}(t)) and having a frequency (f₀), equal to N times the carrier frequency f_{P}, the phase lock loop also comprising a divider by N of the said output signal (s_{VCO}(t)) of the oscillator, in order to apply, to an input (e2) of the phase comparator (CP), a binary signal synchronous with the modulated signal and of a frequency, the carrier frequency fp, the other input (e1) of the phase comparator receiving the said modulated signal (s_{PSK}(t)), the output signal (s_{VCO}(t)) of the oscillator being applied-as a clock (H) of a first binary counter (CO₁) for measuring the duration of the high levels of the modulated signal (s_{PSK}(t)) and as a clock of a second binary counter (CO₂) for measuring the duration of the low levels of the said modulated signal, in order to detect the changes in phase on these levels.

2. Demodulation device according to Claim 1, characterised in that the first counter (CO₁) and the second counter (CO₂) are adapted to supply respectively a first signal (D3) for detection of change of phase on the high level of the modulated signal and a second signal (D2) for detection of change of phase on the low level of the modulated signal when the number of pulses counted in the respective counter exceeds a predetermined number.

3. Demodulation device according to Claim 2, characterised in that the demodulation device comprises a flip-flop (RS), the first detection signal (D3) corresponding to a falling edge of the modulating signal sₘ(t) being applied to the reset input (/R), the second detection signal (D2) corresponding to a rising edge of the modulating signal being applied to the set input (/S), this flip-flop giving the demodulated signal (D4) as an output.

4. Demodulation device according to any one of the preceding claims, characterised in that N is equal to 8.

5. Demodulation device according to any one of the preceding claims, characterised in that the low-pass filter (FPB) comprises oversized capacitor and resistor components.

6. Application of a demodulation device according to any one of the preceding claims, to a micromodule card of the contactless type and to a corresponding reading system.

## Patentansprüche

1. Demodulator für ein binäres Signal mit einer Trägerfrequenz fₚ, das durch Pulscodierung eines modulierenden Signals sₘ(t) phasenmoduliert (s_{PSK}(t)) ist, mit einer Phasenverriegelung (PLL), dadurch gekennzeichnet, dass die Phasenverriegelung einen Phasenkomperator (CP), gefolgt von einem Tiefpassfilter (F_{PB}), und einen spannungsgesteuerten Oszillator (VCO) am Ausgang des Filters umfasst, wobei der spannungsgesteuerte Oszillator am Ausgang ein Binärsignal (s_{VCO}(t)) ausgibt, das synchron zu dem modulierten Signal (s_{PSK}(t)) ist und eine Frequenz (f₀) hat, die das N-fache der Trägerfrequenz fₚ ist, wobei die Phasenverriegelung außerdem einen 1:N-Teiler des Ausgangssignals (s_{VCO}(t)) des Oszillators umfasst, um an einem Eingang (e2) des Phasenkomperators (CP) ein binäres Signal anzulegen, das synchron mit dem modulierten Signal und der Frequenz, der Trägerfrequenz fₚ ist, wobei der andere Eingang (e1) des Phasenkomperators das modulierte Signal (s_{PSK}(t)) einliest, wobei das Ausgangssignal (s_{VCO}(t)) des Oszillators als Taktsignal (H) eines ersten binären Zählers (CO₁) zum Bestimmen der Dauer der hohen Pegel des modulierten Signals (s_{PSK}(t)) angelegt wird und als Taktsignals eines zweiten binären Zählers (CO₂) zum Bestimmen der Dauer der niedrigen Pegel des modulierten Signals angelegt wird, um die Phasenänderungen dieser Pegel zu erfassen.

2. Demodulator nach Anspruch 1, dadurch gekennzeichnet, dass der erste Zähler (CO₁) und der zweite Zähler (CO₂) dazu ausgelegt sind, jeweils ein erstes Signal (D3) der Phasenänderungserfassung bei dem hohen Pegel des modulierten Signals und ein zweites Signal (D2) der Phasenänderungserfassung bei dem niedrigen Pegel des modulierten Signals auszugeben, wenn die Zahl der gezählten Pulse in dem jeweiligen Zähler eine vorgegebene Zahl überschreitet.

3. Demodulator nach Anspruch 2, dadurch gekennzeichnet, dass der Demodulator eine Kippstufe (RS) umfasst, wobei das erste Erfassungssignal (D3) einem Abstiegsübergang des modulierenden Signals [sₘ(t)] entspricht, der an den Eingang für das Zurücksetzen (/R) angelegt wird, das zweite Erfassungssignal (D2) einem Aufstiegsübergang des modulierenden Signals entspricht, der an den Eingang für das Setzen auf 1 (/S) angelegt wird, wobei diese Kippstufe am Ausgang das demodulierte Signal (D4) ausgibt.

4. Demodulator nach einem der vorangehenden Ansprüche, dadurch gekennzeichnet, dass N = 8 ist.

5. Demodulator nach einem der vorangehenden Ansprüche, dadurch gekennzeichnet, dass das Tiefpassfilter (F_{pb}) überdimensionierte Widerstands- und kapazitive Elemente umfasst.

6. Anwendung eines Demodulators nach einem der vorangehenden Ansprüche in einer Mikromodul-Karte ohne Kontakt und in einem entsprechenden Lesesystem.
